# EUROPEAN PATENT APPLICATION

(11) **EP 4 696 902 A1**
(43) Date of publication of application: **18.02.2026**
(21) Application number: 24788509.8
(22) Date of filing: 14.03.2024
(51) Int. Cl.: F16D 13/52

(54) **CLUTCH DEVICE**

(30) Priority: 14.04.2023 JP 2023066655
(71) Applicant: Kabushiki Kaisha F.C.C., Hamamatsu-shi, Shizuoka 431-1394 (JP)
(72) Inventor: SUZUKI Takayuki, Hamamatsu-shi, Shizuoka 431-1394 (JP); AONO Yuki, Hamamatsu-shi, Shizuoka 431-1394 (JP)
(74) Representative: Grünecker Patent- und Rechtsanwälte PartG mbB
(86) International application number: PCT/JP2024/010117
(87) International publication number: WO 2024/214479

(57) **Abstract**

A clutch device 10 includes a clutch spring 25 urging a pressure plate 70 in a first direction D1, and a stopper plate 100 secured to a clutch center 40. The pressure plate 70 includes a spring housing 84 located to the side of a pressure-side assist cam surface 90A in a rotation direction S of the pressure plate 70 and housing the clutch spring 25. The clutch device 10 includes a reduction portion 110 reducing a restoring force of the clutch spring 25 in a direction from the clutch spring 25 toward the pressure-side assist cam surface 90A during a time period until a center-side assist cam surface 60A and the pressure-side assist cam surface 90A approach and contact each other from a state of being apart from each other in the rotation direction S.

## Description

### Technical Field

The present invention relates to a clutch device.

### Background Art

Conventionally, a vehicle such as a motorcycle or the like includes a clutch device. For example, Patent Literature 1 discloses a clutch device including a clutch center holding output-side rotating plates, a pressure plate provided to be movable toward, or away from, the clutch center, and a clutch spring urging the pressure plate toward the clutch center. The clutch spring is housed in a housing portion formed in the pressure plate. One of ends of the clutch spring is in contact with the pressure plate, and the other of the ends of the clutch spring is in contact with a stopper plate secured to the clutch center. The clutch center and the pressure plate of the clutch device described in Patent Literature 1 respectively include center-side assist cam surfaces and pressure-side assist cam surfaces, each of which generates a force in a direction from the pressure plate toward the clutch center to increase a pressing force between input-side rotating plates and the output-side rotating plates when a rotation driving force of an engine is allowed to be transferred to an output shaft.

### Citation List

### Patent Literature

Patent Literature 1 : Japanese Patent No. 6894792

### Summary of Invention

### Technical Problem

While a clutch-engaged state is transferred to a clutch-disengaged state, that is, while the center-side assist cam surfaces and the pressure-side assist cam surfaces are transferred into a state of being out of contact with each other from a state of being in contact with each other, the pressure plate is moved in a direction away from the clutch center while rotating in a circumferential direction with respect to the clutch center. Therefore, the clutch spring housed in a housing portion may have a restoring force generated therein in a direction from the clutch spring toward the pressure-side assist cam surfaces (that is, a restoring force to restore the state where the center-side assist cam surfaces and the pressure-side assist cam surfaces are in contact with each other). In the case where such a restoring force is excessively large, while the clutch-disengaged state is transferred to the clutch-engaged state, the restoring force may cause the center-side assist cam surfaces and the pressure-side assist cam surfaces to approach each other rapidly to undesirably result in rapid clutch engagement.

The present invention, made in light of the above-described point, has an object of providing a clutch device suppressing such rapid clutch engagement.

### Solution to Problem

A clutch device according to the present invention is a clutch device allowing or blocking transfer of a rotation driving force of an input shaft to an output shaft. The clutch device includes a clutch center housed in a clutch housing holding a plurality of input-side rotating plates rotationally drivable by rotational driving of the input shaft, the clutch center being rotationally drivable together with the output shaft; a pressure plate provided to be movable toward, or away from, and to be rotatable with respect to, the clutch center, the pressure plate holding a plurality of output-side rotating plates alternately arranged with the plurality of input-side rotating plates, the pressure plate being capable of pressing the input-side rotating plates and the output-side rotating plates; a clutch spring urging the pressure plate in a first direction where the first direction is a direction in which the pressure plate moves toward the clutch center and a second direction is a direction in which the pressure plate moves away from the clutch center; and a stopper plate secured to the clutch center and suppressing movement of the pressure plate away from the clutch center in the second direction by a predetermined distance or longer. An end, on the side of the first direction, of the clutch spring is in contact with the pressure plate, and an end, on the side of the second direction, of the clutch spring is in contact with the stopper plate. The clutch center includes a center-side assist cam surface generating a force in a direction from the pressure plate toward the clutch center, in order to increase a pressing force between the input-side rotating plates and the output-side rotating plates, when the clutch center rotates with respect to the pressure plate. The pressure plate includes a pressure-side assist cam surface configured to be contactable with the center-side assist cam surface, and generating a force in a direction from the pressure plate toward the clutch center in order to increase the pressing force between the input-side rotating plates and the output-side rotating plates, when the pressure plate rotates with respect to the clutch center, and a housing portion located to the side of the pressure-side assist cam surface in a rotation direction of the pressure plate, the housing portion housing the clutch spring. The clutch device includes a reduction portion reducing a restoring force of the clutch spring in a direction from the clutch spring toward the pressure-side assist cam surface during a time period until the center-side assist cam surface and the pressure-side assist cam surface approach and contact each other from a state of being apart from each other in the rotation direction.

With the clutch device according to the present invention, the reduction portion reduces the restoring force of the clutch spring in the direction from the clutch spring toward the pressure-side assist cam surface during the time period until the center-side assist cam surface and the pressure-side assist cam surface approach and contact each other from a state of being apart from each other in the rotation direction. As described above, the restoring force that may be generated in the clutch spring is reduced by the reduction portion. Therefore, rapid contact of the center-side assist cam surface and the pressure-side assist cam surface by the restoring force is suppressed. That is, rapid clutch engagement is suppressed by the reduction portion.

Another clutch device according to the present invention is a clutch device allowing or blocking transfer of a rotation driving force of an input shaft to an output shaft. The clutch device includes a clutch center housed in a clutch housing holding a plurality of input-side rotating plates rotationally drivable by rotational driving of the input shaft, the clutch center being rotationally drivable together with the output shaft; a pressure plate provided to be movable toward, or away from, and to be rotatable with respect to, the clutch center, the pressure plate holding a plurality of output-side rotating plates alternately arranged with the plurality of input-side rotating plates, the pressure plate being capable of pressing the input-side rotating plates and the output-side rotating plates; a clutch spring urging the pressure plate in a first direction where the first direction is a direction in which the pressure plate moves toward the clutch center and a second direction is a direction in which the pressure plate moves away from the clutch center; and a lifter plate secured to the pressure plate and suppressing movement of the pressure plate away from the clutch center in the second direction by a predetermined distance or longer. An end, on the side of the first direction, of the clutch spring is in contact with the lifter plate, and an end, on the side of the second direction, of the clutch spring is in contact with the clutch center. The clutch center includes a center-side assist cam surface generating a force in a direction from the pressure plate toward the clutch center, in order to increase a pressing force between the input-side rotating plates and the output-side rotating plates, when the clutch center rotates with respect to the pressure plate, and a housing portion located to the side of the center-side assist cam surface in a rotation direction of the clutch center, the housing portion housing the clutch spring. The pressure plate includes a pressure-side assist cam surface configured to be contactable with the center-side assist cam surface, and generating a force in a direction from the pressure plate toward the clutch center in order to increase the pressing force between the input-side rotating plates and the output-side rotating plates, when the pressure plate rotates with respect to the clutch center. The clutch device includes a reduction portion reducing a restoring force of the clutch spring in a direction from the clutch spring toward the center-side assist cam surface during a time period until the center-side assist cam surface and the pressure-side assist cam surface approach and contact each other from a state of being apart from each other in the rotation direction.

With the another clutch device according to the present invention, the reduction portion reduces the restoring force of the clutch spring in the direction from the clutch spring toward the center-side assist cam surface during the time period until the center-side assist cam surface and the pressure-side assist cam surface approach and contact each other from a state of being apart from each other in the rotation direction. As described above, the restoring force that may be generated in the clutch spring is reduced by the reduction portion. Therefore, rapid contact of the center-side assist cam surface and the pressure-side assist cam surface by the restoring force is suppressed. That is, rapid clutch engagement is suppressed by the reduction portion.

### Advantageous Effects of Invention

According to the present invention, a clutch device suppressing rapid clutch engagement.

### Brief Description of Drawings

[Fig. 1] Fig. 1 is a cross-sectional view of a clutch device according to embodiment 1.
[Fig. 2] Fig. 2 is a perspective view of a clutch center according to embodiment 1.
[Fig. 3] Fig. 3 is a plan view of the clutch center according to embodiment 1.
[Fig. 4] Fig. 4 is a perspective view of a pressure plate according to embodiment 1.
[Fig. 5] Fig. 5 is a plan view of the pressure plate according to embodiment 1.
[Fig. 6] Fig. 6 is a perspective view of the pressure plate according to embodiment 1.
[Fig. 7] Fig. 7 is a plan view of the pressure plate according to embodiment 1.
[Fig. 8A] Fig. 8A is a schematic view illustrating effects of a center-side assist cam surface and a pressure-side assist cam surface.
[Fig. 8B] Fig. 8B is a schematic view illustrating effects of a center-side slipper cam surface and a pressure-side slipper cam surface.
[Fig. 9] Fig. 9 is a plan view showing a state where clutch springs are housed in spring housings of the pressure plate according to embodiment 1.
[Fig. 10A] Fig. 10A is a cross-sectional view of the clutch spring in a clutch-disengaged state.
[Fig. 10B] Fig. 10B is a cross-sectional view of the clutch spring in a clutch-engaged state.
[Fig. 11A] Fig. 11A is a cross-sectional view of a clutch spring in a clutch-disengaged state in embodiment 2.
[Fig. 11B] Fig. 11B is a cross-sectional view of the clutch spring in a clutch-engaged state in embodiment 2.
[Fig. 12] Fig. 12 is a plan view showing a state where the clutch springs are housed in spring housings of a pressure plate according to embodiment 2.
[Fig. 13] Fig. 13 is a cross-sectional view of a clutch device according to embodiment 3.
[Fig. 14A] Fig. 14A is a cross-sectional view of a clutch spring in a clutch-disengaged state.
[Fig. 14B] Fig. 14B is a cross-sectional view of the clutch spring in a clutch-engaged state.
[Fig. 15A] Fig. 15A is a cross-sectional view of a clutch spring in a clutch-disengaged state in embodiment 4.
[Fig. 15B] Fig. 15B is a cross-sectional view of the clutch spring in a clutch-engaged state in embodiment 4.

### Description of Embodiments

Hereinafter, embodiments of a clutch device according to the present invention will be described with reference to the drawings. The embodiments described herein are, of course, not intended to particularly limit the present invention. Elements and portions having the same functions are denoted by the same reference signs, and description for the same elements and portions will be omitted or simplified as appropriate.

### <Embodiment 1>

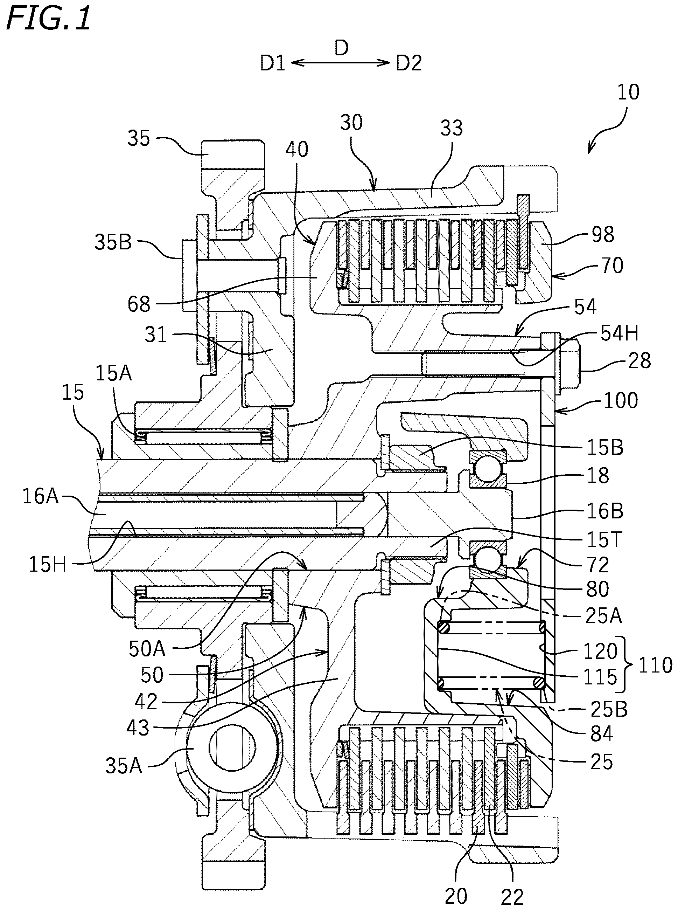

Fig. 1 is a cross-sectional view of a clutch device 10 according to this embodiment. The clutch device 10 is provided in, for example, a vehicle such as a motorcycle or the like. The clutch device 10, for example, allows or blocks transfer of a rotation driving force of an input shaft (crankshaft) of an engine of the motorcycle to an output shaft 15. The clutch device 10 allows or blocks the transfer of the rotation driving force of the input shaft to a drive wheel (rear wheel) through the output shaft 15. The clutch device 10 is located between the engine and a transmission.

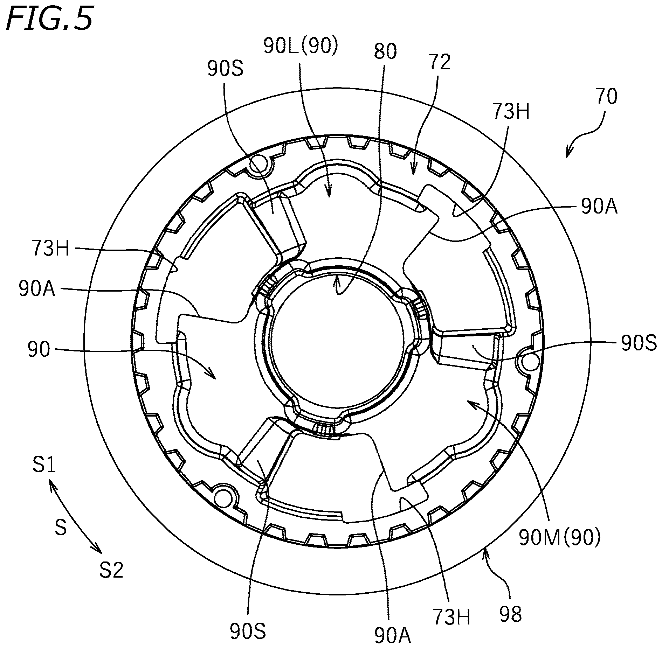

In the following description, a direction in which a pressure plate 70 of the clutch device 10 moves toward, and away from, a clutch center 40 will be referred to as a direction D (an example of moving direction). A direction in which the pressure plate 70 moves toward the clutch center 40 will be referred to as a first direction D1, and a direction in which the pressure plate 70 moves away from the clutch center 40 will be referred to as a second direction D2. A rotation direction (i.e., a circumferential direction) of the clutch center 40 and the pressure plate 70 will be referred to as a rotation direction S. Regarding the rotation direction S, a direction from one pressure-side cam portion 90 toward another pressure-side cam portion 90 will be referred to as a first rotation direction S1 (see Fig. 5), and a direction from the other pressure-side cam portion 90 toward the one pressure-side cam portion 90 will be referred to as a second rotation direction S2 (see Fig. 5). In this embodiment, an axial direction of the output shaft 15, an axial direction of a clutch housing 30, an axial direction of the clutch center 40, and an axial direction of the pressure plate 70 are the same as the direction D. The pressure plate 70 and the clutch center 40 rotate in the first circumferential direction S1. It should be noted that the directions described above are defined simply for the convenience of description, and do not limit the manner of installation of the clutch device 10 in any way, or do not limit the present invention in any way.

As shown in Fig. 1, the clutch device 10 includes the output shaft 15, input-side rotating plates 20, output-side rotating plates 22, the clutch housing 30, the clutch center 40, the pressure plate 70, a stopper plate 100, clutch springs 25, and reduction portions 110. The clutch device is a so-called pull-type clutch device.

As shown in Fig. 1, the output shaft 15 is a hollow shaft. One of ends of the output shaft 15 supports an input gear 35 described below and the clutch housing 30 via a needle bearing 15A such that the input gear 35 and the clutch housing 30 are rotatable. The output shaft 15 supports the clutch center 40 via a nut 15B such that the clutch center 40 is secured. That is, the output shaft 15 rotates integrally with the clutch center 40. The other of the ends of the output shaft 15 is coupled with, for example, a transmission (not shown) of a motorcycle.

As shown in Fig. 1, the output shaft 15 includes a push rod 16A and a push member 16B provided to be adjacent to the push rod 16A in a hollow portion 15H. The hollow portion 15H has a function of being a flow path for clutch oil. The clutch oil flows in the output shaft 15, that is, in the hollow portion 15H. The push rod 16A and the push member 16B are provided to be slidable in the hollow portion 15H of the output shaft 15. The push rod 16A has one end thereof (left end in the figure) coupled with a clutch mechanism (e.g., a clutch operation lever or an operation button) of the motorcycle, and slides in the hollow portion 15H by a clutch operation made by a driver and thus presses the push member 16B in the second direction D2. A portion of the push member 16B protrudes outward of the output shaft 15 (in this embodiment, in the second direction D2), and is coupled with a release bearing 18 provided in the pressure plate 70. The push rod 16A and the push member 16B are each formed to have a diameter shorter than an inner diameter of the hollow portion 15H, so that the clutch oil is guaranteed to flow easily in the hollow portion 15H.

The clutch housing 30 is formed of an aluminum alloy. The clutch housing 30 is formed to have a bottomed cylindrical shape. As shown in Fig. 1, the clutch housing 30 includes a bottom wall 31 having a generally circular shape and a side wall 33 extending in the second direction D2 from an edge of the bottom wall 31. The clutch housing 30 holds the plurality of input-side rotating plates 20.

As shown in Fig. 1, the input gear 35 is provided on the bottom wall 31 of the clutch housing 30. The input gear 35 is secured to the bottom wall 31 by a rivet 35B via a torque damper 35A. The input gear 35 is meshed with a drive gear (not shown) rotatable by rotational driving of the input shaft of the engine. The input gear 35 is rotationally drivable integrally with the clutch housing 30, independently from the output shaft 15.

The input-side rotating plates 20 are rotationally drivable by the rotational driving of the input shaft. As shown in Fig. 1, the input-side rotating plates 20 are held on an inner circumferential surface of the side wall 33 of the clutch housing 30. The input-side rotating plates 20 are held by the clutch housing 30 through spline fitting. The input-side rotating plates 20 are provided to be displaceable in the axial direction of the clutch housing 30 (i.e., in the direction D). The input-side rotating plates 20 are provided to be rotatable integrally with the clutch housing 30.

The input-side rotating plates 20 are pushed against the output-side rotating plates 22. The input-side rotating plates 20 are formed to be annular. The input-side rotating plates 20 are molded by die-cast with aluminum. The input-side rotating plates 20 include a plurality of friction members (not shown) formed of paper pasted on a front surface and a rear surface thereof. Grooves each having a depth of several hundred micrometers are formed between the friction members to hold the clutch oil.

As shown in Fig. 1, the clutch center 40 is housed in the clutch housing 30. The clutch center 40 is located concentrically with the clutch housing 30. The clutch center 40 includes a cylindrical body 42 and a flange 68 extending in a radially outward direction from an outer circumferential edge of the body 42. The clutch center 40 holds the plurality of output-side rotating plates 22 alternately arranged with the input-side rotating plates 20 in the direction D. The clutch center 40 is rotatably drivable together with the output shaft 15.

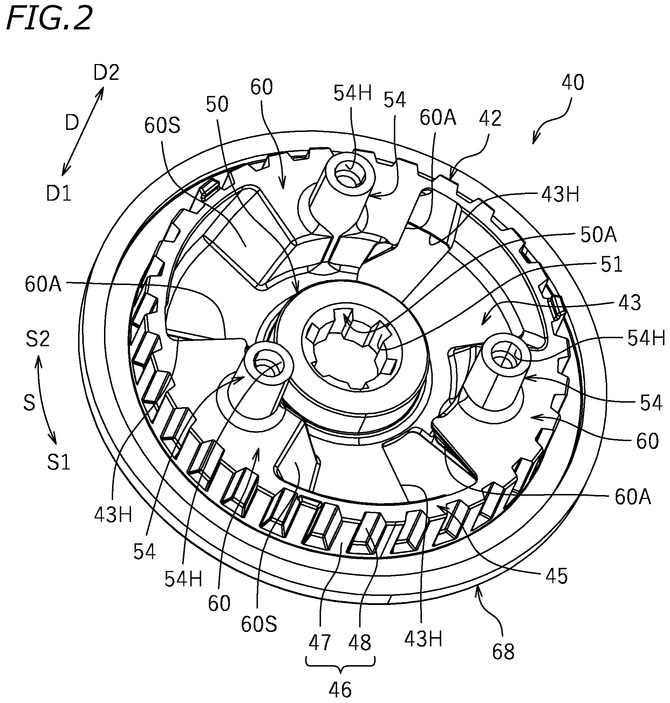

As shown in Fig. 2, the body 42 includes an annular base wall 43, an outer circumferential wall 45 located ahead of the base wall 43 in the radially outward direction and extending in the second direction D2, an output shaft holding portion 50 provided at a center of the base wall 43, and a plurality of center-side cam portions 60 connected with the base wall 43 and the outer circumferential wall 45.

As shown in Fig. 2, the output shaft holding portion 50 is formed to be cylindrical. The output shaft holding portion 50 has an insertion hole 51 formed therein, into which the output shaft 15 (see Fig. 1) is inserted and with which the output shaft 15 is spline-fitted. The insertion hole 51 is formed to penetrate the base wall 43. An inner circumferential surface 50A, of the output shaft holding portion 50, that defines the insertion hole 51 has a plurality of spline grooves formed therein, which extend in the axial direction. The output shaft 15 is coupled with the output shaft holding portion 50 (see Fig. 1).

As shown in Fig. 2, the outer circumferential wall 45 of the clutch center 40 is located ahead of the output shaft holding portion 50 in the radially outward direction. A spline fitting portion 46 is provided on an outer circumferential surface of the outer circumferential wall 45. The spline fitting portion 46 includes a plurality of center-side fitting teeth 47 extending in the axial direction of the clutch center 40 and arranged along the outer circumferential surface of the outer circumferential wall 45, and a plurality of spline grooves 48 each formed between adjacent ones of the center-side fitting teeth 47 and extending in the axial direction of the clutch center 40. The center-side fitting teeth 47 hold the output-side rotating plates 22. The plurality of center-side fitting teeth 47 are arranged in the rotation direction S. The plurality of center-side fitting teeth 47 are formed at an equal interval in the rotation direction S. The plurality of center-side fitting teeth 47 are formed to have the same shape as each other. The center-side fitting teeth 47 project in the radially outward direction from the outer circumferential surface of the outer circumferential wall 45. An outer circumferential surface of the center-side fitting teeth 47 is formed to be generally parallel to an axis of the output shaft 15.

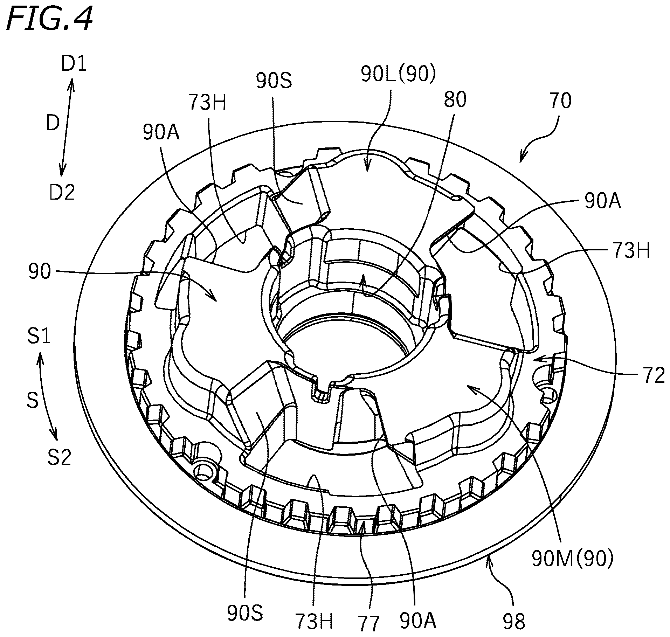

The output-side rotating plates 22 are held by the spline fitting portion 46 of the clutch center 40 and the pressure plate 70. A portion of the output-side rotating plates 22 is held, through spline fitting, by the center-side fitting teeth 47 and the spline grooves 48 of the clutch center 40. Another portion of the output-side rotating plates 22 is held by pressure-side fitting teeth 77 described below (see Fig. 4) of the pressure plate 70. The output-side rotating plates 22 are provided to be displaceable in the axial direction of the clutch center 40. The output-side rotating plates 22 are provided to be rotatable integrally with the clutch center 40.

The output-side rotating plates 22 are pushed against the input-side rotating plates 20. The output-side rotating plates 22 are formed to be annular. The output-side rotating plates 22 are molded by punching a thin plate of an SPCC material into an annular shape. The friction members included in the input-side rotating plates 20 may be provided in the output-side rotating plates 22 instead of the input-side rotating plates 20, or may be provided in both of the input-side rotating plates 20 and the output-side rotating plates 22.

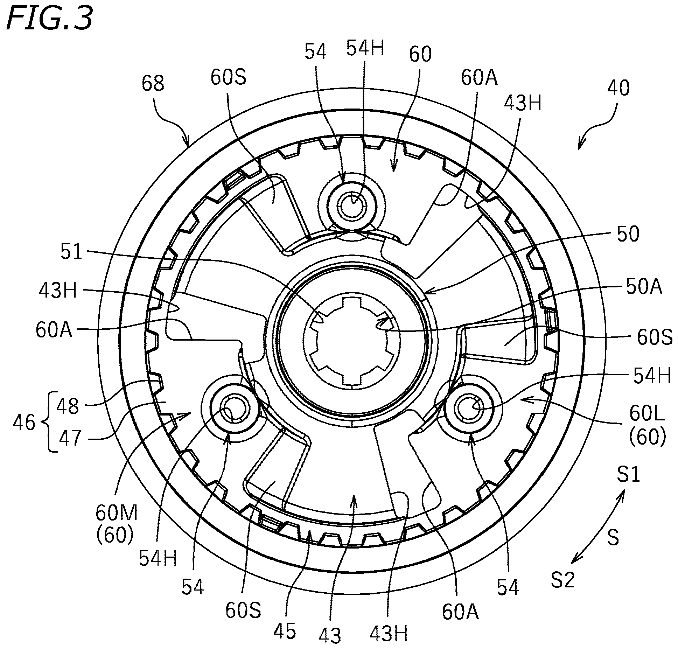

As shown in Fig. 2, each of the center-side cam portions 60 is formed to have a truncated quadrangular pyramid shape having a cam surface formed of a slope acting as an Assist & Slipper (registered trademark) mechanism. The cam surface as the Assist & Slipper (registered trademark) mechanism generates an assist torque as a force increasing a pressing force (contact pressure force) between the input-side rotating plates 20 and the output-side rotating plates 22 or a slipper torque as a force separating the input-side rotating plates 20 and the output-side rotating plates 22 from each other at an early stage and shifting these plates into a half-clutch state. Each center-side cam portion 60 is formed to project in the second direction D2 from the base wall 43. As shown in Fig. 3, the center-side cam portions 60 are located at an equal interval in the rotation direction S of the clutch center 40. In this embodiment, the clutch center 40 includes three center-side cam portions 60. The number of the center-side cam portions 60 is not limited to three.

As shown in Fig. 3, the center-side cam portions 60 are located ahead of the output shaft holding portion 50 in the radially outward direction. The center-side cam portions 60 each include a center-side assist cam surface 60A and a center-side slipper cam surface 60S. The center-side assist cam surface 60A is configured to generate a force in a direction from the pressure plate 70 toward the clutch center 40 (in this embodiment, in the first direction D1), in order to increase the pressing force (contact pressure force) between the input-side rotating plates 20 and the output-side rotating plates 22, when the clutch center 40 rotates with respect to the pressure plate 70. In this embodiment, when this force is generated, the position of the pressure plate 70 with respect to the clutch center 40 does not change, and the pressure plate 70 does not need to move toward the clutch center 40 physically. The pressure plate 70 may be displaced with respect to the clutch center 40 physically. The center-side slipper cam surface 60S is configured to separate the pressure plate 70 from the clutch center 40, in order to decrease the pressing force (contact pressure force) between the input-side rotating plates 20 and the output-side rotating plates 22, when the clutch center 40 rotates with respect to the pressure plate 70. Regarding two of the center-side cam portions 60 adjacent to each other in the rotation direction S, the center-side assist cam surface 60A of one center-side cam portion 60L and the center-side slipper cam surface 60S of the other center-side cam portion 60M are opposed to each other in the rotation direction S.

As shown in Fig. 2, the clutch center 40 includes a plurality of (in this embodiment, three) bosses 54. The bosses 54 support the stopper plate 100 (see Fig. 1). The plurality of bosses 54 are located at an equal interval in the rotation direction S. The bosses 54 are each formed to be cylindrical. The bosses 54 are located ahead of the output shaft holding portion 50 in the radially outward direction. The bosses 54 extend toward the pressure plate 70 (i.e., in the second direction D2). The bosses 54 are respectively provided on the center-side cam portions 60. The bosses 54 are each provided between the center-side assist cam surface 60A and the center-side slipper cam surface 60S in the rotation direction S. The bosses 54 each have a screw hole 54H formed therein. The screw hole 54H extends in the axial direction of the clutch center 40. Bolts 28 (see Fig. 1) usable to secure the stopper plate 100 to the clutch center 40 are respectively inserted into the screw holes 54H.

As shown in Fig. 2 and Fig. 3, the clutch center 40 has center-side cam holes 43H formed therein, each of which penetrates a portion of the base wall 43. The center-side cam holes 43H each extend from a position to the side of the output shaft holding portion 50 to the outer circumferential wall 45. The center-side cam holes 43H are each located between the center-side assist cam surface 60A of one center-side cam portion 60 and the center-side slipper cam surface 60S of another center-side cam portion 60. As seen in the axial direction of the clutch center 40, each center-side assist cam surface 60A and the corresponding center-side cam hole 43H partially overlap each other.

As shown in Fig. 1, the pressure plate 70 is provided to be movable toward, or away from, and to be rotatable with respect to, the clutch center 40. The pressure plate 70 is configured to be capable of pressing the input-side rotating plates 20 and the output-side rotating plates 22. The pressure plate 70 is located concentrically with the clutch center 40 and the clutch housing 30. The pressure plate 70 includes a body 72 and a flange 98 connected with an outer circumferential edge, on the side of the second direction D2, of the body 72 and extending in the radially outward direction. The body 72 projects to be ahead of the flange 98 in the first direction D1. The flange 98 is located along an outer circumferential edge of the pressure plate 70. The flange 98 is located ahead of a cylindrical portion 80 (see Fig. 4) described below in the radially outward direction. The pressure plate 70 holds the plurality of output-side rotating plates 22 located alternately with the input-side rotating plates 20. The flange 98 is configured to be capable of pressing the input-side rotating plates 20 and the output-side rotating plates 22.

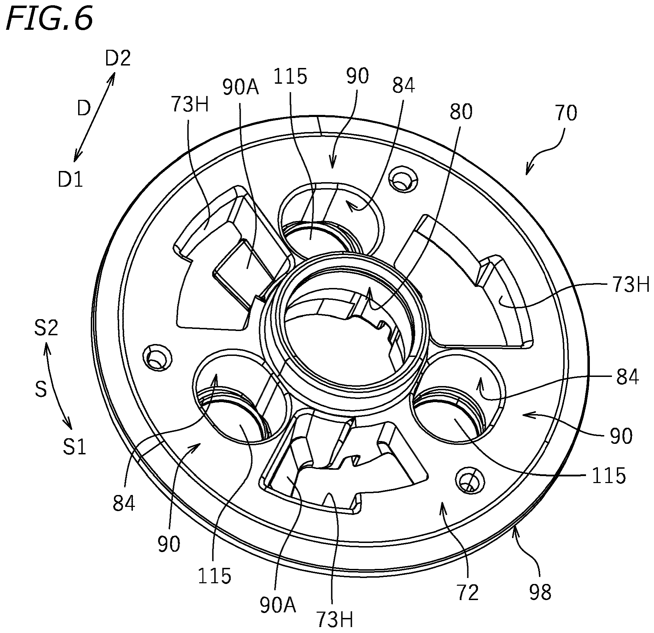

As shown in Fig. 4, the body 72 includes the cylindrical portion 80, the plurality of pressure-side cam portions 90, and spring housings 84 (see Fig. 6). The spring housings 84 are each an example of housing portion.

The cylindrical portion 80 is formed to be cylindrical. The cylindrical portion 80 is integrally formed with the pressure-side cam portions 90. The cylindrical portion 80 houses a tip 15T (see Fig. 1) of the output shaft 15. The cylindrical portion 80 houses the release bearing 18 (see Fig. 1). The cylindrical portion 80 receives a pressing force from the push member 16B. The cylindrical portion 80 receives the clutch oil flowing out from the tip 15T of the output shaft 15.

As shown in Fig. 4, each of the pressure-side cam portions 90 is formed to have a truncated quadrangular pyramid shape having a cam surface formed of a slope acting as an Assist & Slipper (registered trademark) mechanism. The cam surface as the Assist & Slipper (registered trademark) mechanism generates an assist torque or a slipper torque as a result of sliding against the corresponding center-side cam portion 60. Each pressure-side cam portion 90 is formed to project to be ahead of the flange 98 in the first direction D1. As shown in Fig. 5, the pressure-side cam portions 90 are located at an equal interval in the rotation direction S of the pressure plate 70. In this embodiment, the pressure plate 70 includes three pressure-side cam portions 90. The number of the pressure-side cam portions 90 is not limited to three.

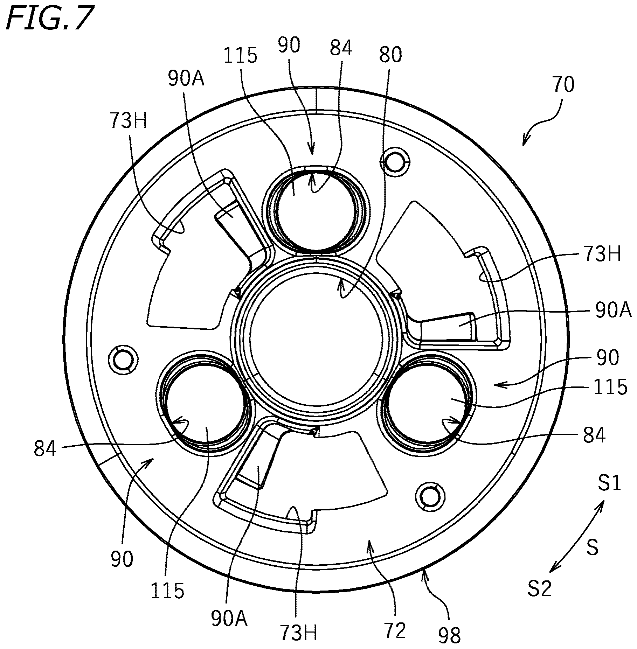

As shown in Fig. 5, the pressure-side cam portions 90 are located ahead of the cylindrical portion 80 in the radially outward direction. The pressure-side cam portions 90 each include a pressure-side assist cam surface 90A (see also Fig. 6 and Fig. 7) and a pressure-side slipper cam surface 90S. The pressure-side assist cam surface 90A is configured to be contactable with the center-side assist cam surface 60A. The pressure-side assist cam surface 90A is configured to generate a force in the direction from the pressure plate 70 toward the clutch center 40, in order to increase the pressing force (contact pressure force) between the input-side rotating plates 20 and the output-side rotating plates 22, when the pressure plate 70 rotates with respect to the clutch center 40. The pressure-side slipper cam surface 90S is configured to be contactable with the center-side slipper cam surface 60S. The pressure-side slipper cam surface 90S is configured to separate the pressure plate 70 from the clutch center 40, in order to decrease the pressing force (contact pressure force) between the input-side rotating plates 20 and the output-side rotating plates 22, when the pressure plate 70 rotates with respect to the clutch center 40. Regarding two of the pressure-side cam portions 90 adjacent to each other in the rotation direction S, the pressure-side assist cam surface 90A of one pressure-side cam portion 90L and the pressure-side slipper cam surface 90S of the other pressure-side cam portion 90M are opposed to each other in the rotation direction S.

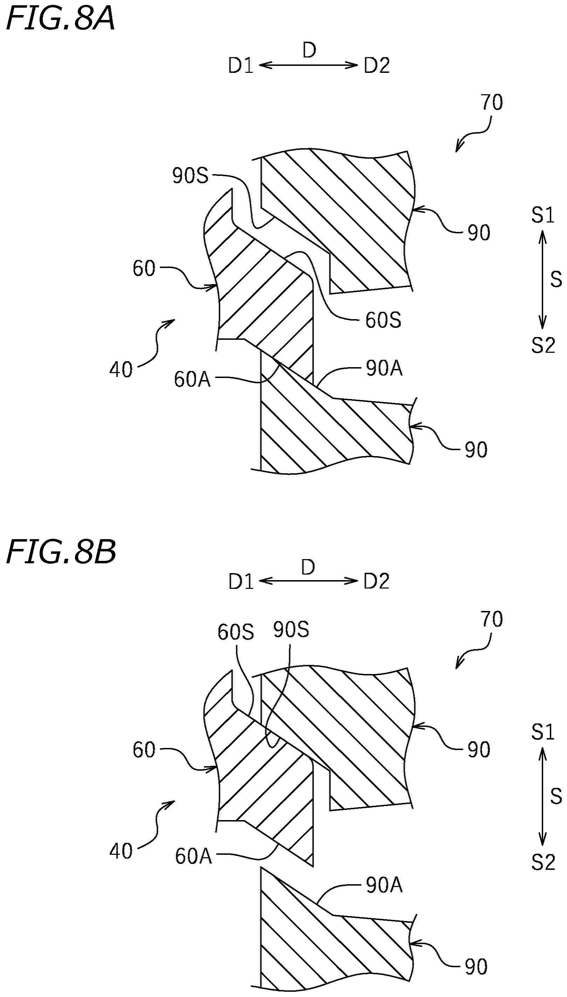

Effects of the center-side cam portions 60 and the pressure-side cam portions 90 will now be described. Referring to Fig. 8A, when the rotation speed of the engine increases so that a rotation driving force input to the input gear 35 and the clutch housing 30 is allowed to be transferred to the output shaft 15 through the clutch center 40, a rotation force in the first rotation direction S1 is applied to the pressure plate 70. Thus, with the effects of the center-side assist cam surface 60A and the pressure-side assist cam surface 90A, a force in the first direction D1 is generated in the pressure plate 70. Accordingly, the pressure plate 70 moves further toward the clutch center 40 (in the first direction D1) to increase the contact pressure force between the input-side rotating plates 20 and the output-side rotating plates 22.

By contrast, referring to Fig. 8B, when the rotation speed of the output shaft 15 exceeds the rotation speed of the input gear 35 and the clutch housing 30 and a back torque is generated, a rotation force in the first rotation direction S1 is applied to the clutch center 40. Thus, with the effects of the center-side slipper cam surface 60S and the pressure-side slipper cam surface 90S, the pressure plate 70 moves in the second direction D2 to release the input-side rotating plates 20 and the output-side rotating plates 22 from the contact pressure force. In this manner, inconveniences regarding the engine and the transmission caused by the back torque are avoided.

As shown in Fig. 4 and Fig. 5, the pressure plate 70 has pressure-side cam holes 73H formed therein, each of which penetrates a portion of the body 72. The pressure-side cam holes 73H are located ahead of the cylindrical portion 80 in the radially outward direction. The pressure-side cam holes 73H each extend from a position to the side of the cylindrical portion 80 to a position ahead of the corresponding pressure-side cam portion 90 in the radially outward direction. The pressure-side cam holes 73H are each formed between the pressure-side assist cam surface 90A of one of two adjacent pressure-side cam portions 90 and the pressure-side slipper cam surface 90S of the other of the two adjacent pressure-side cam portions 90. As shown in Fig. 5 and Fig. 7, as seen in the axial direction of the pressure plate 70, each pressure-side assist cam surface 90A and the corresponding pressure-side cam hole 73H partially overlap each other. In a state where the clutch center 40 and the pressure plate 70 are assembled together, the bosses 54 of the clutch center 40 are respectively located in the pressure-side cam holes 73H.

As shown in Fig. 4, the pressure plate 70 includes a plurality of pressure-side fitting teeth 77 formed in an outer circumferential surface of the body 72. The pressure-side fitting teeth 77 hold at least one output-side rotating plate 22. The pressure-side fitting teeth 77 are located ahead of the flange 98 in the first direction S1. The pressure-side fitting teeth 77 are located ahead of the cylindrical portion 80 in the radially outward direction. The pressure-side fitting teeth 77 are located ahead of the pressure-side cam portions 90 in the radially outward direction. The pressure-side fitting teeth 77 are located ahead of the pressure-side cam portions 90 in the radially outward direction. The plurality of pressure-side fitting teeth 77 are arranged in the rotation direction S. The plurality of pressure-side fitting teeth 77 are located at an equal interval in the rotation direction S. In this embodiment, a portion of the pressure-side fitting teeth 77 is removed, and therefore, the interval corresponding to such removed pressure-side fitting teeth 77 is wider than the other intervals. However, adjacent ones of the other pressure-side fitting teeth 77 are located at an equal interval.

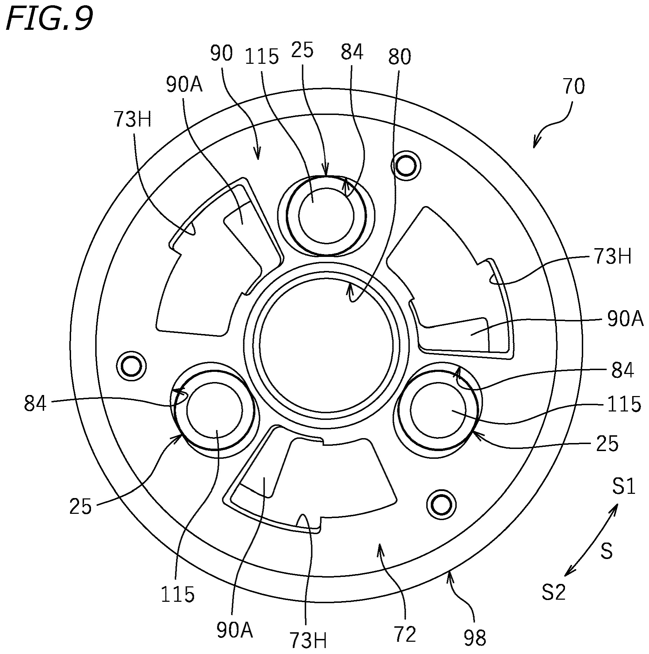

As shown in Fig. 6 and Fig. 7, the spring housings 84 are respectively formed in the pressure-side cam portions 90. The spring housings 84 are formed to be recessed in the first direction D1 from the side of the second direction D2. The spring housings 84 are formed to be elliptical as seen in the direction D (see also Fig. 9). The spring housings 84 respectively house the clutch springs 25 (see Fig. 1). The spring housings 84 are each located to the side of the corresponding pressure-side assist cam surface 90A in the rotation direction S. The expression "to the side of" does not necessarily refer to a state where the spring housing 84 and the pressure-side assist cam surface 90A are adjacent to each other. The spring housing 84 and the pressure-side assist cam surface 90A may be apart from each other in the rotation direction S, or another element (e.g., a recess or the like) integral with the pressure-side cam portion 90 may be provided between the spring housing 84 and the pressure-side assist cam surface 90A in the rotation direction S. The spring housings 84 are each located between the pressure-side assist cam surface 90A and the pressure-side slipper cam surface 90S in the rotation direction S. As shown in Fig. 1, the spring housings 84 each have a first holding groove 115 formed therein, recessed in the first direction D1 from the side of the second direction D2. The first holding groove 115 holds an end 25A described below, on the side of the first direction D1, of the clutch spring 25. The first holding groove 115 secures the end 25A on the side of the first direction D1 to the pressure plate 70. The first holding groove 115 is formed to be circular as seen in the direction D. The first holding groove 115 has an inner diameter that is equal to, or shorter than, an outer diameter of the clutch spring 25. The end 25A, on the side of the first direction D1, of the clutch spring 25 is fitted into the first holding groove 115, so that the first holding groove 115 secures the end 25A on the side of the first direction D1 to the pressure plate 70. As long as the first holding groove 115 suppresses the movement of the end 25A on the side of the first direction D1 with respect to the pressure plate 70 in the rotation direction S, the first holding groove 115 does not need to be formed to be circular as seen in the direction D (that is, there may be a gap between a portion of an inner circumferential surface of the first holding groove 115 and a portion of an outer circumferential surface of the clutch spring 25). The first holding groove 115 may be formed to be, for example, elliptical as seen in the direction D.

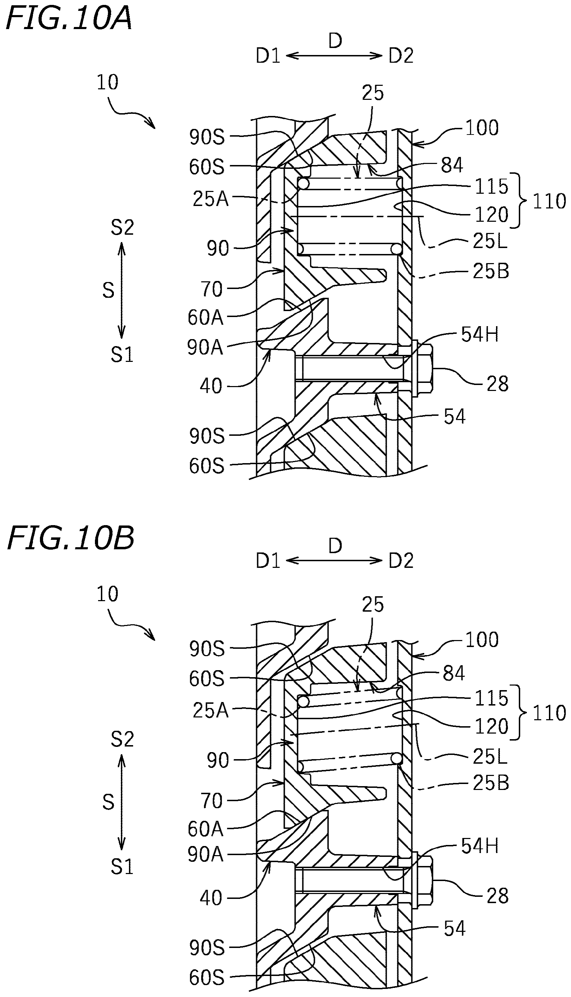

As shown in Fig. 1 and Fig. 9, the clutch springs 25 are respectively housed in the spring housings 84. The clutch springs 25 urge the pressure plate 70 toward the clutch center 40. That is, the clutch springs 25 urge the pressure plate 70 in the first direction D1. The clutch springs 25 are, for example, coil springs formed of helically wound spring steel. The clutch springs 25 are formed to be, for example, cylindrical. The end 25A, on the side of the first direction D1, of each of the clutch springs 25 is in contact with the pressure plate 70. An end 25B, on the side of the second direction D2, of each of the clutch springs 25 is in contact with the stopper plate 100. As shown in Fig. 10A and Fig. 10B, during the time period until the center-side assist cam surface 60A and the pressure-side assist cam surface 90A approach and contact each other (see Fig. 10B) from a state of being apart from each other in the rotation direction S (see Fig. 10A), an axis 25L of the clutch spring 25 inclines in a direction from the pressure-side assist cam surface 90A toward the clutch spring 25 (i.e,. in the second rotation direction S2) as extending in the second direction D2 from the side of the first direction D1 (see Fig. 10B), or is parallel to a straight line extending in the direction D, in which the pressure plate 70 moves (see Fig. 10A). According to this embodiment, while the clutch-disengaged state (see Fig. 10A) is transferred to the clutch-engaged state (see Fig. 10B), the clutch spring 25 does not have a restoring force generated therein in a direction from the clutch spring 25 toward the pressure-side assist cam surface 90A (i.e., in the first rotation direction S1). The axis 25L of the clutch spring 25 may incline in the direction from the pressure-side assist cam surface 90A toward the clutch spring 25 (i.e,. in the second rotation direction S2) as extending in the second direction D2 from the side of the first direction D1 throughout the time period of transfer from the state in Fig. 10A to the state of Fig. 10B. That is, in the example shown in Fig. 10A, the axis 25L of the clutch spring 25 is parallel to a straight line extending in the direction D in the clutch-disengaged state, but alternatively, the axis 25L of the clutch spring 25 may incline in the direction from the pressure-side assist cam surface 90A toward the clutch spring 25 (i.e,. in the second rotation direction S2) as extending in the second direction D2 from the side of the first direction D1.

As shown in Fig. 1, the stopper plate 100 is provided to be contactable with the pressure plate 70. The stopper plate 100 may be provided to be contactable with a member movable in the direction D in association with the pressure plate 70. The stopper plate 100 suppresses the movement of the pressure plate 70 away from the clutch center 40 in the second direction D2 by a predetermined distance or longer. The stopper plate 100 is secured to the clutch center 40. The stopper plate 100 is secured to the bosses 54 of the clutch center 40 by the bolts 28. In a state where the clutch springs 25 are housed in the spring housings 84, the stopper plate 100 is secured to the clutch center 40 by being tightened to the bosses 54 of the clutch center 40 via the bolts 28. The stopper plate 100 is formed to be ring-shaped as seen in a plan view. The stopper plate 100 has second holding grooves 120 formed therein, each of which is recessed in the second direction D2 from the side of the first direction D1. The second holding groove 120 holds the end 25B, on the side of the second direction D2, of the clutch spring 25. The second holding groove 120 secures the end 25B on the side of the second direction D2 to the stopper plate 100. The second holding groove 120 is formed to be circular as seen in the direction D. The second holding groove 120 has an inner diameter that is equal to, or shorter than, the outer diameter of the clutch spring 25. The end 25B, on the side of the second direction D2, of the clutch spring 25 is fitted into the second holding groove 120, so that the second holding groove 120 secures the end 25B on the side of the second direction D2 to the pressure plate 70. As long as the second holding groove 120 suppresses the movement of the end 25B on the side of the second direction D2 with respect to the pressure plate 70 in the rotation direction S, the second holding groove 120 does not need to be formed to be circular as seen in the direction D (that is, there may be a gap between a portion of an inner circumferential surface of the second holding groove 120 and a portion of the outer circumferential surface of the clutch spring 25). The second holding groove 120 may be formed to be, for example, elliptical as seen in the direction D.

As shown in Fig. 1, the reduction portions 110 in this embodiment each include the first holding groove 115 and the second holding groove 120. As shown in Fig. 10A and Fig. 10B, during the time period until the center-side assist cam surface 60A and the pressure-side assist cam surface 90A approach and contact each other (see Fig. 10B) from a state of being apart from each other in the rotation direction S (see Fig. 10A), the reduction portion 110 reduces the restoring force of the clutch spring 25 in the direction from the clutch spring 25 toward the pressure-side assist cam surface 90A (i.e., in the first rotation direction S1). In this embodiment, during the time period until the center-side assist cam surface 60A and the pressure-side assist cam surface 90A approach and contact each other (see Fig. 10B) from a state of being apart from each other in the rotation direction S (see Fig. 10A), the reduction portion 110 reduces, by the first holding groove 115 and the second holding groove 120, the restoring force of the clutch spring 25 in the direction from the clutch spring 25 toward the pressure-side assist cam surface 90A (i.e., in the first rotation direction S1).

As shown in Fig. 10A and Fig. 10B, during the time period until the center-side assist cam surface 60A and the pressure-side assist cam surface 90A approach and contact each other (see Fig. 10B) from a state of being apart from each other in the rotation direction S (see Fig. 10A), the reduction portion 110 suppresses (e.g., restricts) the movement of the end 25A, on the side of the first direction D1, of the clutch spring 25 with respect to the pressure plate 70 in the rotation direction S, and the movement of the end 25B, on the side of the second direction D2, of the clutch spring 25 with respect to the stopper plate 100 in the rotation direction S. In this embodiment, during the time period until the center-side assist cam surface 60A and the pressure-side assist cam surface 90A approach and contact each other (see Fig. 10B) from a state of being apart from each other in the rotation direction S (see Fig. 10A), the reduction portion 110 suppresses (e.g., restricts), by the first holding groove 115 and the second holding groove 120, the movement of the end 25A, on the side of the first direction D1, of the clutch spring 25 with respect to the pressure plate 70 in the rotation direction S, and the movement of the end 25B, on the side of the second direction D2, of the clutch spring 25 with respect to the stopper plate 100 in the rotation direction S. As long as being capable of reducing the restoring force, the reduction portion 110 slightly permits the movement of the end 25A on the side of the first direction D1 with respect to the pressure plate 70 in the rotation direction S, and the movement of the end 25B on the side of the second direction D2 with respect to the stopper plate 100 in the rotation direction S.

As shown in Fig. 10A and Fig. 10B, the reduction portion 110 secures the end 25A, on the side of the first direction D1, of the clutch spring 25 to the pressure plate 70, and secures the end 25B, on the side of the second direction D2, of the clutch spring 25 to the stopper plate 100. In this embodiment, the reduction portion 110 secures the end 25A, on the side of the first direction D1, of the clutch spring 40 to the pressure plate 70 by the first holding groove 115, and secures the end 25B, on the side of the second direction D2, of the clutch spring 25 to the stopper plate 100 by the second holding groove 120.

Now, an operation of the clutch device 10 according to this embodiment will be described. As described above, the clutch device 10 is located between the engine and the transmission of a motorcycle, and allows or blocks transfer of a rotation driving force of the engine to the transmission by the driver making a clutch operation (e.g., making an operation on an operation lever or pressing an operation button).

In the case where the driver of the motorcycle does not make a clutch operation, a clutch release mechanism (not shown) of the clutch device 10 does not press the push rod 16A. Therefore, the pressure plate 70 presses the input-side rotating plates 20 by an urging force (elastic force) of the clutch spring 25. As a result, the input-side rotating plates 20 and the output-side rotating plates 22 are pushed to each other to realize a friction-coupled state (i.e., the clutch-engaged state), and the clutch center 40 is rotationally driven. Thus, the rotation driving force of the engine is transferred to the clutch center 40, and the output shaft 15 is rotationally driven.

By contrast, when the driver of the motorcycle makes a clutch operation in the clutch-engaged state, the clutch release mechanism (not shown) of the clutch device 10 presses the push rod 16A. Therefore, the pressure plate 70 is displaced away from the clutch center 40 (in the second direction D2) against the urging force of the clutch spring 25. As a result, the input-side rotating plates 20 and the output-side rotating plates 22 are released from the friction-coupled state (i.e., the clutch-disengaged state) in the clutch center 40, and therefore, the rotational driving of the output shaft 15 is attenuated or paused. This blocks the transfer of the rotation driving force of the engine to the clutch center 40. During the time period in which the clutch-engaged state (see Fig. 10B) is transferred to the clutch-disengaged state (see Fig. 10A), the reduction portion 110 reduces the restoring force of the clutch spring 25 in the direction from the clutch spring 25 toward the pressure-side assist cam surface 90A (i.e., in the first rotation direction S1). In this embodiment, the above-mentioned restoring force is not generated in the clutch spring 25.

When the driver cancels the clutch operation (e.g., the driver cancels the operation on the operation lever or release the operation button from the pressed state) in the clutch-disengaged state (see Fig. 10A), the pressure plate 70 is released from the pressing state realized via the push member 16B by the clutch release mechanism (not shown). Therefore, the pressure plate 70 is displaced toward the clutch center 40 (in the first direction D1) by the urging force of the clutch spring 25. During the time period in which the clutch-disengaged state (see Fig. 10A) is transferred to the clutch-engaged state (see Fig. 10B), the reduction portion 110 reduces the restoring force of the clutch spring 25 in the direction from the clutch spring 25 toward the pressure-side assist cam surface 90A (i.e., in the first rotation direction S1). In this embodiment, the restoring force is not generated in the clutch spring 25. Therefore, rapid contact of the center-side assist cam surface 60A and the pressure-side assist cam surface 90A by the restoring force is suppressed.

As described above, according to the clutch device 10 in this embodiment, during the time period until the center-side assist cam surface 60A and the pressure-side assist cam surface 90A approach and contact each other from a state of being apart from each other in the rotation direction S, the reduction portion 110 reduces the restoring force of the clutch spring 25 in the direction from the clutch spring 25 toward the pressure-side assist surface 90A (i.e., in the first rotation direction S1). In this manner, the restoring force that may be generated in the clutch spring 25 is reduced by the reduction portion 110. Therefore, rapid contact of the center-side assist cam surface 60A and the pressure-side assist cam surface 90A by the restoring force is suppressed. That is, the reduction portion 110 suppresses rapid clutch engagement.

According to the clutch device 10 in this embodiment, during the time period until the center-side assist cam surface 60A and the pressure-side assist cam surface 90A approach and contact each other from a state of being apart from each other in the rotation direction S, the reduction portion 110 suppresses the movement of the end 25A, on the side of the first direction D1, of the clutch spring 25 with respect to the pressure plate 70 in the rotation direction S, and the movement of the end 25B, on the side of the second direction D2, of the clutch spring 25 with respect to the stopper plate 100 in the rotation direction S. During the time period until the center-side assist cam surface 60A and the pressure-side assist cam surface 90A approach and contact each other from a state of being apart from each other in the rotation direction S, the axis 25L of the clutch spring 25 inclines in the direction from the pressure-side assist cam surface 90A toward the clutch spring 25 (i.e., in the second rotation direction S2) as extending in the second direction D2 from the side of the first direction D1, or is parallel to a straight line in the direction D, in which the pressure plate 70 moves. According to this embodiment, the restoring force in the direction from the clutch spring 25 toward the pressure-side assist cam surface 90A is not generated in the clutch spring 25.

According to the clutch device 10 in this embodiment, the reduction portion 110 secures the end 25A, on the side of the first direction D1, of the clutch spring 25 to the pressure plate 70, and secures the end 25B, on the side of the second direction D2, of the clutch spring 25 to the stopper plate 100. According to this embodiment, the movement of the clutch spring 25 with respect to each of the pressure plate 70 and the stopper plate 100 is suppressed with more certainty. As a result, the restoring force in the direction from the clutch spring 25 toward the pressure-side assist cam surface 90A is not generated in the clutch spring 25.

According to the clutch device in this embodiment, the reduction portion 110 includes the first holding groove 115 formed in the pressure plate 70, recessed in the first direction D1 from the side of the second direction D2, and holding the end D1, on the side of the first direction D1, of the clutch spring 25, and also includes the second holding groove 120 formed in the stopper plate 100, recessed in the second direction D2 from the side of the first direction D1, and holding the end 25B, on the side of the second direction D2, of the clutch spring 25. According to this embodiment, the clutch spring 25 is secured to the pressure plate 70 and the stopper plate 100 more easily.

### <Embodiment 2>

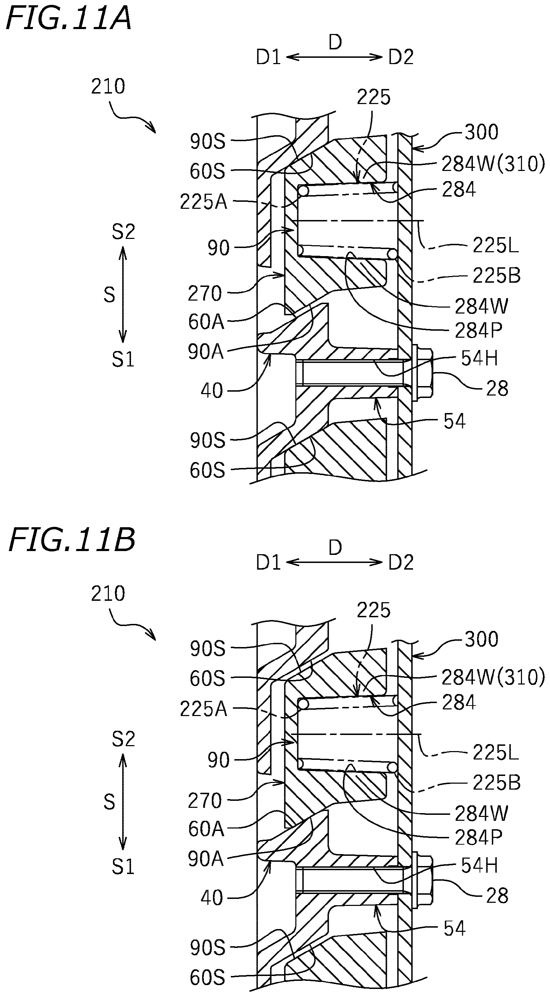

Fig. 11A and Fig. 11B are each a cross-sectional view showing a portion of a clutch device 210 according to embodiment 2. The clutch device 210 includes the output shaft 15, the input-side rotating plates 20, the output-side rotating plates 22, the clutch housing 30, the clutch center 40, a pressure plate 270, a stopper plate 300, clutch springs 225, and reduction portions 310.

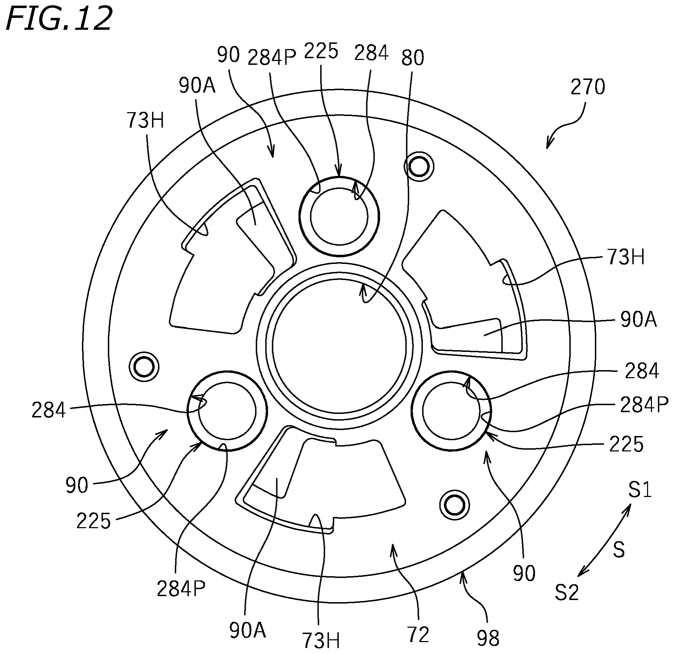

As shown in Fig. 11A and Fig. 12, the pressure plate 270 includes spring housings 284 respectively housing the clutch springs 225. The spring housings 284 are each an example of housing portion. The spring housings 284 are respectively formed in the pressure-side cam portions 90. The spring housings 284 are formed to be recessed in the first direction D1 from the side of the second direction D2. The spring housings 284 are each defined by a partition wall 284W. The spring housings 284 are formed to be circular as seen in the direction D (see also Fig. 12). The spring housings 284 are each formed to have an inner diameter that is increased in the second direction D2 from the side of the first direction D1. The spring housings 284 are each located to the side of the corresponding pressure-side assist cam surface 90A in the rotation direction S. The expression "to the side of" does not necessarily refer to a state where the spring housing 284 and the pressure-side assist cam surface 90A are adjacent to each other. The spring housing 284 and the pressure-side assist cam surface 90A may be apart from each other in the rotation direction S, or another element (e.g., a recess or the like) integral with the pressure-side cam portion 90 may be provided between the spring housing 284 and the pressure-side assist cam surface 90A in the rotation direction S. The spring housings 284 are each located between the pressure-side assist cam surface 90A and the pressure-side slipper cam surface 90S in the rotation direction S.

As shown in Fig. 11A and Fig. 12, the clutch springs 225 are respectively housed in the spring housings 284. The clutch springs 225 are each in contact with an inner circumferential surface 284P of the partition wall 284W in the entirety of the partition wall 284W (i.e., in the entirety of the partition wall 284W in the direction D). The clutch springs 225 are, for example, conical springs formed of helically wound spring steel. The clutch springs 225 are each formed to have, for example, a truncated cone shape having an outer diameter that is increased in the second direction D2 from the side of the first direction D1. The clutch springs 225 urge the pressure plate 70 toward the clutch center 40. That is, the clutch springs 225 urge the pressure plate 70 in the first direction D1. An end 225A, on the side of the first direction D1, of each of the clutch springs 225 is in contact with the pressure plate 70. The end 225A on the side of the first direction D1 is provided not to be slidable with respect to the pressure plate 70. An end 225B, on the side of the second direction D2, of each of the clutch springs 225 is in contact with the stopper plate 100. The end 225B on the side of the second direction D2 is provided to be slidable with respect to the stopper plate 100. As shown in Fig. 11A and Fig. 11B, during the time period until the center-side assist cam surface 60A and the pressure-side assist cam surface 90A approach and contact each other (see Fig. 11B) from a state of being apart from each other in the rotation direction S (see Fig. 11A), an axis 225L of the clutch spring 225 is parallel to a straight line extending in the direction D, in which the pressure plate 270 moves. That is, the clutch spring 225 does not incline. According to this embodiment, a restoring force in a direction from the clutch spring 225 toward the pressure-side assist cam surface 90A (i.e., in the first rotation direction S1) is not generated in the clutch spring 225. Fig. 11A shows a clutch-disengaged state, and Fig. 11B shows a clutch-engaged state.

As shown in Fig. 11A, the stopper plate 300 has substantially the same configuration as that of the stopper plate 100 except that the stopper plate 300 does not have the second holding grooves 120 formed therein (see Fig. 10A).

As shown in Fig. 11A, the reduction portions 310 in this embodiment are each the partition wall 284W defining the spring housing 284. As shown in Fig. 11A and Fig. 11B, during the time period until the center-side assist cam surface 60A and the pressure-side assist cam surface 90A approach and contact each other (see Fig. 11B) from a state of being apart from each other in the rotation direction S (see Fig. 11A), the reduction portion 310 reduces the restoring force of the clutch spring 225 in the direction from the clutch spring 225 toward the pressure-side assist cam surface 90A (i.e., in the first rotation direction S1). In this embodiment, during the time period until the center-side assist cam surface 60A and the pressure-side assist cam surface 90A approach and contact each other (see Fig. 11B) from a state of being apart from each other in the rotation direction S (see Fig. 11A), the reduction portion 310 suppresses the inclination of the clutch spring 225, housed in the clutch housing 284, in the rotation direction S. In this embodiment, during the time period until the center-side assist cam surface 60A and the pressure-side assist cam surface 90A approach and contact each other (see Fig. 11B) from a state of being apart from each other in the rotation direction S (see Fig. 11A), the clutch spring 225 is in contact with the inner circumferential surface 284P of the partition wall 284W in the entirety of the partition wall 284W (i.e., in the entirety of the partition wall 284W in the direction D). Therefore, the clutch spring 225 does not incline, and the restoring force in the direction from the clutch spring 225 toward the pressure-side assist cam surface 90A (i.e., in the first rotation direction S1) is not generated in the clutch spring 225.

According to the clutch device 210 in this embodiment, during the time period until the center-side assist cam surface 60A and the pressure-side assist cam surface 90A approach and contact each other from a state of being apart from each other in the rotation direction S, the reduction portion 310 suppresses the inclination of the clutch spring 225, housed in the clutch housing 284, in the rotation direction S. According to this embodiment, the inclination of the clutch spring 225 in the rotation direction S is suppressed by the reduction portion 310, and therefore, the restoring force in the direction from the clutch spring 225 toward the pressure-side assist cam surface 90A is not generated in the clutch spring 225.

According to the clutch device 210 in this embodiment, the reduction portion 310 is the partition wall 284W defining the clutch housing 284. The clutch spring 225 is in contact with the inner circumferential surface 284P of the partition wall 284W in the entirety of the partition wall 284W. According to this embodiment, the clutch spring 225 does not incline in the rotation direction S. Therefore, the restoring force in the direction from the clutch spring 225 toward the pressure-side assist cam surface 90A is not generated in the clutch spring 225.

According to the clutch device 210 in this embodiment, the spring housing 284 is formed to have an inner diameter that is increased in the second direction D2 from the side of the first direction D1. The clutch spring 225 is formed to have a truncated cone shape. According to this embodiment, the clutch spring 225 does not incline in the rotation direction S. Therefore, the restoring force in the direction from the clutch spring 225 toward the pressure-side assist cam surface 90A is not generated in the clutch spring 225.

### <Embodiment 3>

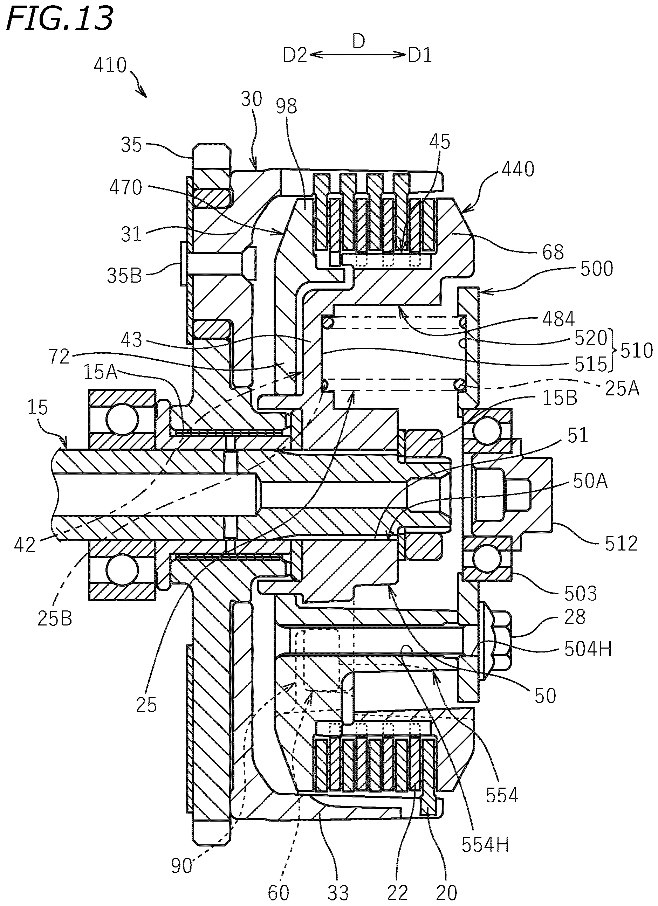

Fig. 13 is a cross-sectional view of a clutch device 410 according to embodiment 3. As shown in Fig. 13, the clutch device 410 includes the output shaft 15, the input-side rotating plates 20, the output-side rotating plates 22, the clutch housing 30, a clutch center 440, a pressure plate 470, a lifter plate 500, the clutch springs 25, and reduction portions 510. The clutch device 410 is a so-called push-type clutch device.

As shown in Fig. 13, the side wall 33 of the clutch housing 30 extends in the first direction D1 from the edge of the bottom wall 31.

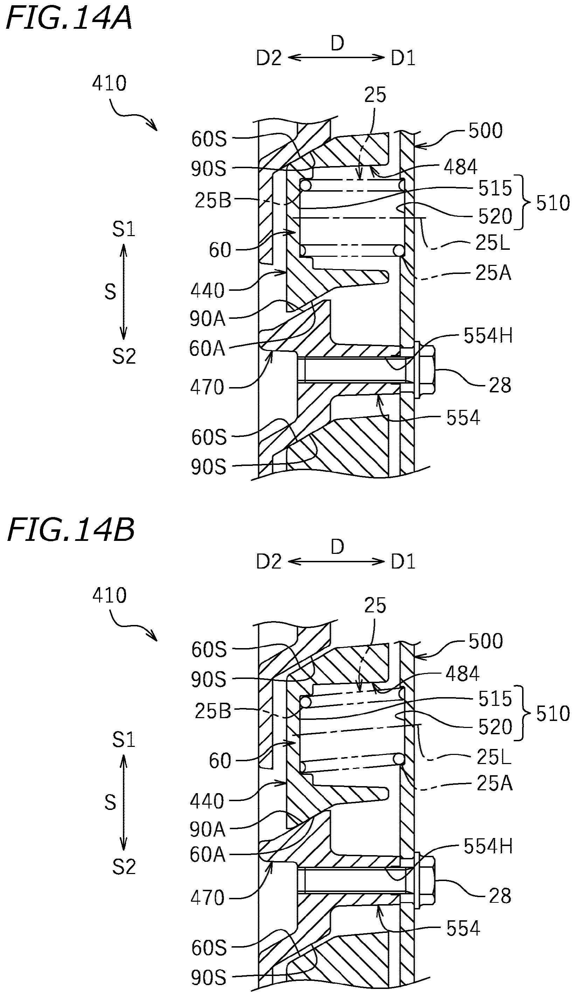

As shown in Fig. 13, the pressure plate 470 includes a plurality of (in this embodiment, three) bosses 554. The bosses 554 support the lifter plate 500. The plurality of bosses 554 are located at an equal interval in the rotation direction S. The bosses 554 are formed to be cylindrical. The bosses 554 extend toward the clutch center 440 (i.e., in the first direction D1). The bosses 554 are respectively provided in the pressure-side cam portions 90. As shown in Fig. 14A and Fig. 14B, the bosses 554 are each located between the pressure-side assist cam surface 90A and the pressure-side slipper cam surface 90S in the rotation direction S. The bosses 554 each have a screw hole 554H formed therein. The screw hole 554H extends in the axial direction of the pressure plate 470. The bolts 28 (see Fig. 13) usable to secure the lifter plate 500 to the pressure plate 470 are respectively inserted into the screw holes 554H.

As shown in Fig. 13, the clutch center 440 includes spring housings 484. The spring housings 484 are each an example of housing portion. The spring housings 484 are formed in the body 42. The spring housings 484 are respectively formed in the center-side cam portions 60. The spring housings 484 are formed to be recessed in the second direction D2 from the side of the first direction D1. The spring housings 484 are formed to be elliptical as seen in the direction D. The spring housings 484 respectively house the clutch springs 25. As shown in Fig. 14A and Fig. 14B, the spring housings 484 are each located to the side of the corresponding center-side assist cam surface 60A in the rotation direction S. The expression "to the side of" does not necessarily refer to a state where the spring housing 484 and the center-side assist cam surface 60A are adjacent to each other. The spring housing 484 and the center-side assist cam surface 60A may be apart from each other in the rotation direction S, or another element (e.g., a recess or the like) integral with the center-side cam portion 60 may be provided between the spring housing 484 and the center-side assist cam surface 60A in the rotation direction S. The spring housings 484 are each located between the center-side assist cam surface 60A and the center-side slipper cam surface 60S in the rotation direction S. The spring housings 84 each have a first holding groove 515 formed therein, recessed in the second direction D2 from the side of the first direction D1. The first holding groove 515 holds the end 25B, on the side of the second direction D2, of the clutch spring 25. The first holding groove 515 secures the end 25B on the side of the second direction D2 to the clutch center 440. The first holding groove 515 has substantially the same configuration as that of the first holding groove 115.

As shown in Fig. 13, the clutch springs 25 are respectively housed in the clutch housings 484. The end 25B, on the side of the second direction D2, of each of the clutch springs 25 is in contact with the clutch center 440. The end 25A, on the side of the first direction D1, of each of the clutch springs 25 is in contact with the lifter plate 500. As shown in Fig. 14A and Fig. 14B, during the time period until the center-side assist cam surface 60A and the pressure-side assist cam surface 90A approach and contact each other (see Fig. 14B) from a state of being apart from each other in the rotation direction S (see Fig. 14A), the axis 25L of the clutch spring 25 inclines in a direction from the center-side assist cam surface 60A toward the clutch spring 25 (i.e,. in the first rotation direction S1) as extending in the first direction D1 from the side of the second direction D2 (see Fig. 14B), or is parallel to a straight line extending in the direction D, in which the pressure plate 470 moves (see Fig. 14A). According to this embodiment, while a clutch-disengaged state (see Fig. 14A) is transferred to a clutch-engaged state (see Fig. 14B), the clutch spring 25 does not have a restoring force generated therein in a direction from the clutch spring 25 toward the center-side assist cam surface 60A (i.e., in the second rotation direction S2). The axis 25L of the clutch spring 25 may incline in the direction from the center-side assist cam surface 60A toward the clutch spring 25 (i.e,. in the first rotation direction S1) as extending in the first direction D1 from the side of the second direction D2 throughout the time period of transfer from the state in Fig. 14A to the state of Fig. 14B.

As shown in Fig. 13, the lifter plate 500 is provided to be contactable with the clutch center 40. The lifter plate 500 may be provided to be contactable with a member rotatable in association with the clutch center 400. The lifter plate 500 displaces the pressure plate 470 in the direction D. The lifter plate 500 suppresses the movement of the pressure plate 470 away from the clutch center 440 in the second direction D2 by a predetermined distance or longer. The lifter plate 500 is secured to the pressure plate 470. The lifter plate 500 is secured to the bosses 554 of the pressure plate 470 by the bolts 28. The lifter plate 500 is integrally rotatable with the pressure plate 470. The lifter plate 500 is movable with respect to the clutch center 440 in the direction D and also is rotatable with respect to the clutch center 440. The lifter plate 500 is formed to be disc-shaped. A release bearing 503 is provided in the lifter plate 500. The release bearing 503 is pressed to a release fork 512 of a clutch release mechanism (not shown). The "clutch release mechanism" refers to a mechanical device that is provided in a vehicle such as a motorcycle having the clutch device 410 mounted thereon and that presses the release bearing 503 toward the output shaft 15 (i.e., in the second direction D2) via the release fork 512 by an operation made by the driver on the clutch operation lever (not shown). The lifter plate 500 supports the clutch springs 25 housed in the spring housings 484 of the clutch center 440. The lifter plate 500 has insertion holes 504H formed therein, into which the bolts 28 usable to secure the lifter plate 500 to the pressure plate 470 are inserted. The lifter plate 500 has second holding grooves 520 formed therein, each recessed in the first direction D1 from the side of the second direction D2. The second holding groove 520 holds the end 25A, on the side of the first direction D1, of the clutch spring 25. The second holding groove 520 secures the end 25A on the side of the first direction D1 to the lifter plate 500. The second holding groove 520 has substantially the same configuration as that of the second holding groove 120.

As shown in Fig. 13, the reduction portions 510 in this embodiment each include the first holding groove 515 and the second holding groove 520. As shown in Fig. 14A and Fig. 14B, during the time period until the center-side assist cam surface 60A and the pressure-side assist cam surface 90A approach and contact each other (see Fig. 14B) from a state of being apart from each other in the rotation direction S (see Fig. 14A), the reduction portion 510 reduces the restoring force of the clutch spring 25 in the direction from the clutch spring 25 toward the center-side assist cam surface 60A (i.e., in the second rotation direction S2). In this embodiment, during the time period until the center-side assist cam surface 60A and the pressure-side assist cam surface 90A approach and contact each other (see Fig. 14B) from a state of being apart from each other in the rotation direction S (see Fig. 14A), the reduction portion 510 reduces, by the first holding groove 515 and the second holding groove 520, the restoring force of the clutch spring 25 in the direction from the clutch spring 25 toward the center-side assist cam surface 60A (i.e., in the second rotation direction S2).

As shown in Fig. 14A and Fig. 14B, during the time period until the center-side assist cam surface 60A and the pressure-side assist cam surface 90A approach and contact each other (see Fig. 14B) from a state of being apart from each other in the rotation direction S (see Fig. 14A), the reduction portion 510 suppresses the movement of the end 25B, on the side of the second direction D2, of the clutch spring 25 with respect to the clutch center 440 in the rotation direction S, and the movement of the end 25A, on the side of the first direction D1, of the clutch spring 25 with respect to the lifter plate 500 in the rotation direction S. In this embodiment, during the time period until the center-side assist cam surface 60A and the pressure-side assist cam surface 90A approach and contact each other (see Fig. 14B) from a state of being apart from each other in the rotation direction S (see Fig. 14A), the reduction portion 510 suppresses, by the first holding groove 515 and the second holding groove 520, the movement of the end 25B, on the side of the second direction D2, of the clutch spring 25 with respect to the clutch center 440 in the rotation direction S, and the movement of the end 25A, on the side of the first direction D1, of the clutch spring 25 with respect to the lifter plate 500 in the rotation direction S. As long as being capable of reducing the restoring force, the reduction portion 510 slightly permits the movement of the end 25B on the side of the second direction D2 with respect to the clutch center 440 in the rotation direction S, and the movement of the end 25A on the side of the first direction D1 with respect to the lifter plate 500 in the rotation direction S.

As shown in Fig. 14A and Fig. 14B, the reduction portion 510 secures the end 25B, on the side of the second direction D2, of the clutch spring 25 to the clutch center 440, and secures the end 25A, on the side of the first direction D1, of the clutch spring 25 to the lifter plate 500. In this embodiment, the reduction portion 510 secures the end 25B, on the side of the second direction D2, of the clutch spring 40 to the clutch center 440 by the first holding groove 515, and secures the end 25A, on the side of the first direction D1, of the clutch spring 25 to the lifter plate 500 by the second holding groove 520.

As described above, according to the clutch device 410 in this embodiment, during the time period until the center-side assist cam surface 60A and the pressure-side assist cam surface 90A approach and contact each other from a state of being apart from each other in the rotation direction S, the reduction portion 510 reduces the restoring force of the clutch spring 25 in the direction from the clutch spring 25 toward the center-side assist cam surface 60A (i.e., in the second rotation direction S2). In this manner, the restoring force that may be generated in the clutch spring 25 is reduced by the reduction portion 510. Therefore, rapid contact of the center-side assist cam surface 60A and the pressure-side assist cam surface 90A by the restoring force is suppressed. That is, the reduction portion 510 suppresses rapid clutch engagement.

According to the clutch device 410 in this embodiment, during the time period until the center-side assist cam surface 60A and the pressure-side assist cam surface 90A approach and contact each other from a state of being apart from each other in the rotation direction S, the reduction portion 510 suppresses the movement of the end 25B, on the side of the second direction D2, of the clutch spring 25 with respect to the clutch center 440 in the rotation direction S, and the movement of the end 25A, on the side of the first direction D1, of the clutch spring 25 with respect to the lifter plate 500 in the rotation direction S. During the time period until the center-side assist cam surface 60A and the pressure-side assist cam surface 90A approach and contact each other from a state of being apart from each other in the rotation direction S, the axis 25L of the clutch spring 25 inclines in the direction from the center-side assist cam surface 60A toward the clutch spring 25 (i.e,. in the first rotation direction S1) as extending in the first direction D1 from the side of the second direction D2, or is parallel to a straight line extending in the direction D, in which the pressure plate 70 moves. According to this embodiment, the restoring force in the direction from the clutch spring 25 toward the center-side assist cam surface 60A is not generated in the clutch spring 25.

### <Embodiment 4>

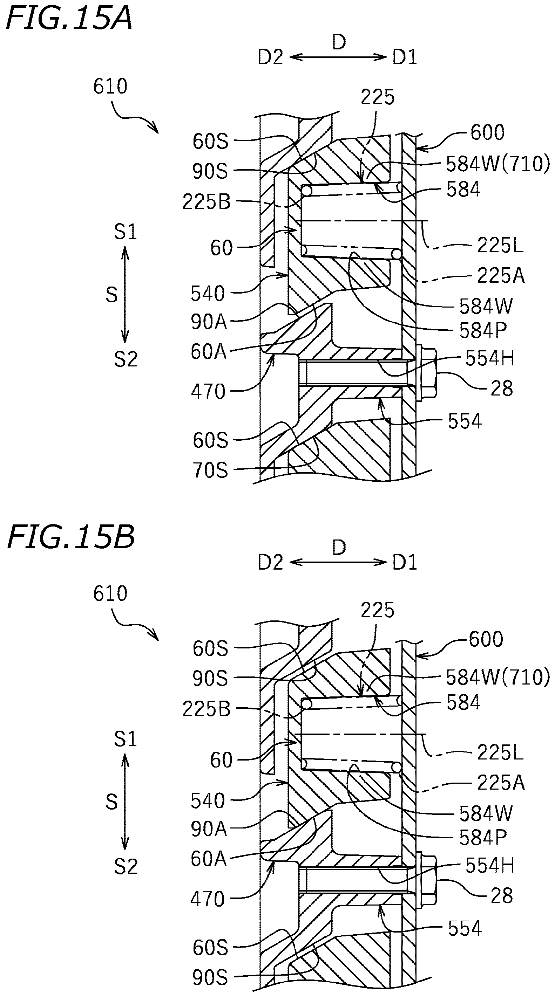

Fig. 15A and Fig. 15B are each a cross-sectional view showing a portion of a clutch device 610 according to embodiment 4. The clutch device 610 includes the output shaft 15, the input-side rotating plates 20, the output-side rotating plates 22, the clutch housing 30, a clutch center 540, the pressure plate 470, a lifter plate 600, the clutch springs 225, and reduction portions 710.

As shown in Fig. 15A and Fig. 15B, the clutch center 540 includes spring housings 584 respectively housing the clutch springs 225. The spring housings 584 are each an example of housing portion. The spring housings 584 are respectively formed in the center-side cam portions 60. The spring housings 584 are formed to be recessed in the second direction D2 from the side of the first direction D1. The spring housings 584 are each defined by a partition wall 584W. The spring housings 584 are formed to be circular as seen in the direction D. The spring housings 584 are each formed to have an inner diameter that is increased in the first direction D1 from the side of the second direction D2. The spring housings 584 are each located to the side of the corresponding center-side assist cam surface 60A in the rotation direction S. The expression "to the side of" does not necessarily refer to a state where the spring housing 584 and the center-side assist cam surface 60A are adjacent to each other. The spring housing 584 and the center-side assist cam surface 60A may be apart from each other in the rotation direction S, or another element (e.g., a recess or the like) integral with the center-side cam portion 60 may be provided between the spring housing 584 and the center-side assist cam surface 60A in the rotation direction S. The spring housing 584 are each located between the center-side assist cam surface 60A and the center-side slipper cam surface 60S in the rotation direction S.

As shown in Fig. 15A and Fig. 15B, the clutch springs 225 are respectively housed in the spring housings 584. The clutch springs 225 are each in contact with an inner circumferential surface 584P of the partition wall 584W in the entirety of the partition wall 584W (i.e., in the entirety of the partition wall 584W in the direction D). The clutch springs 225 urge the pressure plate 470 toward the clutch center 540. That is, the clutch springs 225 urge the pressure plate 470 in the first direction D1. An end 225B, on the side of the second direction D2, of each of the clutch springs 225 is in contact with the clutch center 540. The end 225B on the side of the second direction D2 is provided not to be slidable with respect to the clutch center 540. An end 225A, on the side of the first direction D1, of each of the clutch springs 225 is in contact with the lifter plate 600. The end 225A on the side of the first direction D1 is provided to be slidable with respect to the lifter plate 600. During the time period until the center-side assist cam surface 60A and the pressure-side assist cam surface 90A approach and contact each other (see Fig. 15B) from a state of being apart from each other in the rotation direction S (see Fig. 15A), the axis 225L of the clutch spring 225 is parallel to a straight line extending in the direction D, in which the pressure plate 270 moves. That is, the clutch spring 225 does not incline. According to this embodiment, the clutch spring 225 does not have a restoring force generated therein in a direction from the clutch spring 225 toward the center-side assist cam surface 60A (i.e., in the second rotation direction S2). Fig. 15A shows a clutch-disengaged state, and Fig. 15B shows a clutch-engaged state.

As shown in Fig. 15A, the lifter plate 600 has substantially the same configuration as that of the lifter plate 500 except that the lifter plate 600 does not have the second holding grooves 520 formed therein (see Fig. 14A).

As shown in Fig. 15A, the reduction portions 710 in this embodiment are each the partition wall 584W defining the spring housing 584. As shown in Fig. 15A and Fig. 15B, during the time period until the center-side assist cam surface 60A and the pressure-side assist cam surface 90A approach and contact each other (see Fig. 15B) from a state of being apart from each other in the rotation direction S (see Fig. 15A), the reduction portion 710 reduces the restoring force of the clutch spring 225 in the direction from the clutch spring 225 toward the center-side assist cam surface 60A (i.e., in the second rotation direction S2). In this embodiment, during the time period until the center-side assist cam surface 60A and the pressure-side assist cam surface 90A approach and contact each other (see Fig. 15B) from a state of being apart from each other in the rotation direction S (see Fig. 15A), the reduction portion 710 suppresses the inclination of the clutch spring 225, housed in the clutch housing 584, in the rotation direction S. In this embodiment, during the time period until the center-side assist cam surface 60A and the pressure-side assist cam surface 90A approach and contact each other (see Fig. 15B) from a state of being apart from each other in the rotation direction S (see Fig. 15A), the clutch spring 225 is in contact with the inner circumferential surface 584P of the partition wall 584W in the entirety of the partition wall 584W (i.e., in the entirety of the partition wall 584W in the direction D). Therefore, the clutch spring 225 does not incline, and the restoring force in the direction from the clutch spring 225 toward the center-side assist cam surface 60A (i.e., in the second rotation direction S2) is not generated in the clutch spring 225.

According to the clutch device 610 in this embodiment, during the time period until the center-side assist cam surface 60A and the pressure-side assist cam surface 90A approach and contact each other from a state of being apart from each other in the rotation direction S, the reduction portion 710 suppresses the inclination of the clutch spring 225, housed in the clutch housing 584, in the rotation direction S. According to this embodiment, the inclination of the clutch spring 225 in the rotation direction S is suppressed by the reduction portion 710, and therefore, the restoring force in the direction from the clutch spring 225 toward the center-side assist cam surface 60A is not generated in the clutch spring 225.

According to the clutch device 610 in this embodiment, the reduction portion 710 is the partition wall 584W defining the clutch housing 584. The clutch spring 225 is in contact with the inner circumferential surface 584P of the partition wall 584W in the entirety of the partition wall 584W. According to this embodiment, the clutch spring 225 does not incline in the rotation direction S. Therefore, the restoring force in the direction from the clutch spring 225 toward the center-side assist cam surface 60A is not generated in the clutch spring 225.

Preferred embodiments of the present invention are described above. The above-described embodiments are merely illustrative, and the present invention may be carried out in any of various other embodiments.

In embodiment 1 described above, the end 25A, on the side of the first direction D1, of the clutch spring 25 is secured to the pressure plate 70 by the first holding groove 115. The securing method is not limited to this. For example, the end 25A on the side of the first direction D1 may be secured to the pressure plate 70 by being pasted thereon. A highly frictional member may be provided at an area at which the pressure plate 70 and the end 25A on the side of the first direction D1 contact each other to secure the pressure plate 70 and the end 25A to each other. The end 25A on the side of the first direction D1 may be secured to the pressure plate 70 by a projection or the like. The end 25B, on the side of the second direction D2, of the clutch spring 25 may be secured by substantially the same method. In embodiment 3, the end 25B, on the side of the second direction D2, of the clutch spring 25 may be secured to the clutch center 440, or the end 25A, on the side of the first direction D1, of the clutch spring 25 may be secured to the lifter plate 500, by any of substantially the same methods.

In embodiment 2 described above, the clutch spring 225 is in contact with the inner circumferential surface 284P of the partition wall 284W in the entirety of the partition wall 284W, so that the inclination of the clutch spring 225 is suppressed. The method for suppressing the inclination is not limited to this. For example, the inclination of the clutch spring 225 may be suppressed by a projection or the like projecting toward the clutch spring 225 from the inner circumferential surface 284P of the partition wall 284W. In embodiment 4, the inclination of the clutch spring 225 may be suppressed by, for example, a projection or the like projecting toward the clutch spring 225 from the inner circumferential surface 584P of the partition wall 584P.

In embodiment 2 described above, the clutch spring 225 is in contact with the inner circumferential surface 284P of the partition wall 284W in the entirety of the partition wall 284W, so that the inclination of the clutch spring 225 is suppressed. As long as being capable of reducing the restoring force, a slight gap may be provided between an outer circumferential surface of the clutch spring 225 and the inner circumferential surface 284P of the partition wall 284W in the entirety of, or a part of, the partition wall 284W. This is also applicable to embodiment 4.

In embodiments 1 through 4 described above, the clutch centers 40, 440 and 540 each hold the output-side rotating plates 22. The clutch center 40, 440 or 540 does not need to hold the output-side rotating plates 22. That is, all the output-side rotating plates 22 may be held by the pressure plate 70, 270 or 470, and none of the clutch centers 40, 440 and 540 needs to hold any of the output-side rotating plates 22.

### Reference Signs List

- 10: clutch device
- 15: output shaft
- 20: input-side rotating plate
- 22: output-side rotating plate
- 25: clutch spring
- 25A: end on the side of the first direction
- 25B: end on the side of the second direction
- 25L: axis
- 40: clutch center
- 54: boss
- 60: center-side cam portion
- 60A: center-side assist cam surface
- 60S: center-side slipper cam surface
- 70: pressure plate
- 84: spring housing (housing portion)
- 90: pressure-side cam portion
- 90A: pressure-side assist cam surface
- 90S: pressure-side slipper cam surface
- 100: stopper plate
- 110: reduction portion
- 115: first holding groove
- 120: second holding groove

## Claims

1. A clutch device allowing or blocking transfer of a rotation driving force of an input shaft to an output shaft, the clutch device comprising:
a clutch center housed in a clutch housing holding a plurality of input-side rotating plates rotationally drivable by rotational driving of the input shaft, the clutch center being rotationally drivable together with the output shaft;
a pressure plate provided to be movable toward, or away from, and to be rotatable with respect to, the clutch center, the pressure plate holding a plurality of output-side rotating plates alternately arranged with the plurality of input-side rotating plates, the pressure plate being capable of pressing the input-side rotating plates and the output-side rotating plates;
a clutch spring urging the pressure plate in a first direction where the first direction is a direction in which the pressure plate moves toward the clutch center and a second direction is a direction in which the pressure plate moves away from the clutch center; and
a stopper plate secured to the clutch center and suppressing movement of the pressure plate away from the clutch center in the second direction by a predetermined distance or longer,
wherein:
an end, on the side of the first direction, of the clutch spring is in contact with the pressure plate, and an end, on the side of the second direction, of the clutch spring is in contact with the stopper plate,
the clutch center includes:
a center-side assist cam surface generating a force in a direction from the pressure plate toward the clutch center, in order to increase a pressing force between the input-side rotating plates and the output-side rotating plates, when the clutch center rotates with respect to the pressure plate,
the pressure plate includes:
a pressure-side assist cam surface configured to be contactable with the center-side assist cam surface, and generating a force in a direction from the pressure plate toward the clutch center in order to increase the pressing force between the input-side rotating plates and the output-side rotating plates, when the pressure plate rotates with respect to the clutch center, and
a housing portion located to the side of the pressure-side assist cam surface in a rotation direction of the pressure plate, the housing portion housing the clutch spring, and
the clutch device includes a reduction portion reducing a restoring force of the clutch spring in a direction from the clutch spring toward the pressure-side assist cam surface during a time period until the center-side assist cam surface and the pressure-side assist cam surface approach and contact each other from a state of being apart from each other in the rotation direction.

2. The clutch device according to claim 1, wherein the clutch center holds the output-side rotating plates.

3. The clutch device according to claim 1 or 2, wherein during the time period until the center-side assist cam surface and the pressure-side assist cam surface approach and contact each other from a state of being apart from each other in the rotation direction, the reduction portion suppresses inclination of the clutch spring, housed in the housing portion, in the rotation direction.

4. The clutch device according to claim 3, wherein:
the reduction portion is a partition wall defining the housing portion, and
the clutch spring is in contact with an inner circumferential surface of the partition wall in the entirety of the partition wall.

5. The clutch device according to claim 4, wherein:
the housing portion is formed to have an inner diameter that is increased in the second direction from the side of the first direction, and
the clutch spring is formed to have a truncated cone shape.

6. The clutch device according to claim 1 or 2, wherein:
during the time period until the center-side assist cam surface and the pressure-side assist cam surface approach and contact each other from a state of being apart from each other in the rotation direction, the reduction portion suppresses movement of the end, on the side of the first direction, of the clutch spring with respect to the pressure plate in the rotation direction and suppresses movement of the end, on the side of the second direction, of the clutch spring with respect to the stopper plate in the rotation direction, and
during the time period until the center-side assist cam surface and the pressure-side assist cam surface approach and contact each other from a state of being apart from each other in the rotation direction, an axis of the clutch spring inclines in a direction from the pressure-side assist cam surface toward the clutch spring as extending in the second direction from the side of the first direction, or is parallel to a straight line extending in a moving direction in which the pressure plate moves.

7. The clutch device according to claim 6, wherein the reduction portion secures the end, on the side of the first direction, of the clutch spring to the pressure plate, and secures the end, on the side of the second direction, of the clutch spring to the stopper plate.

8. The clutch device according to claim 7, wherein the reduction portion includes:
a first holding groove formed in the pressure plate, recessed in the first direction from the side of the second direction, and holding the end, on the side of the first direction, of the clutch spring, and
a second holding groove formed in the stopper plate, recessed in the second direction from the side of the first direction, and holding the end, on the side of the second direction, of the clutch spring.

9. A clutch device allowing or blocking transfer of a rotation driving force of an input shaft to an output shaft, the clutch device comprising:
a clutch center housed in a clutch housing holding a plurality of input-side rotating plates rotationally drivable by rotational driving of the input shaft, the clutch center being rotationally drivable together with the output shaft;
a pressure plate provided to be movable toward, or away from, and to be rotatable with respect to, the clutch center, the pressure plate holding a plurality of output-side rotating plates alternately arranged with the plurality of input-side rotating plates, the pressure plate being capable of pressing the input-side rotating plates and the output-side rotating plates;
a clutch spring urging the pressure plate in a first direction where the first direction is a direction in which the pressure plate moves toward the clutch center and a second direction is a direction in which the pressure plate moves away from the clutch center; and
a lifter plate secured to the pressure plate and suppressing movement of the pressure plate away from the clutch center in the second direction by a predetermined distance or longer,
wherein:
an end, on the side of the first direction, of the clutch spring is in contact with the lifter plate, and an end, on the side of the second direction, of the clutch spring is in contact with the clutch center,
the clutch center includes:
a center-side assist cam surface generating a force in a direction from the pressure plate toward the clutch center, in order to increase a pressing force between the input-side rotating plates and the output-side rotating plates, when the clutch center rotates with respect to the pressure plate, and
a housing portion located to the side of the center-side assist cam surface in a rotation direction of the clutch center, the housing portion housing the clutch spring,
the pressure plate includes:
a pressure-side assist cam surface configured to be contactable with the center-side assist cam surface, and generating a force in a direction from the pressure plate toward the clutch center in order to increase the pressing force between the input-side rotating plates and the output-side rotating plates, when the pressure plate rotates with respect to the clutch center, and
the clutch device includes a reduction portion reducing a restoring force of the clutch spring in a direction from the clutch spring toward the center-side assist cam surface during a time period until the center-side assist cam surface and the pressure-side assist cam surface approach and contact each other from a state of being apart from each other in the rotation direction.

10. The clutch device according to claim 9, wherein the clutch center holds the output-side rotating plates.

11. The clutch device according to claim 9 or 10, wherein during the time period until the center-side assist cam surface and the pressure-side assist cam surface approach and contact each other from a state of being apart from each other in the rotation direction, the reduction portion suppresses inclination of the clutch spring, housed in the housing portion, in the rotation direction.

12. The clutch device according to claim 11, wherein:
the reduction portion is a partition wall defining the housing portion, and
the clutch spring is in contact with an inner circumferential surface of the partition wall in the entirety of the partition wall.

13. The clutch device according to claim 9 or 10, wherein:
during the time period until the center-side assist cam surface and the pressure-side assist cam surface approach and contact each other from a state of being apart from each other in the rotation direction, the reduction portion suppresses movement of the end, on the side of the first direction, of the clutch spring with respect to the lifter plate in the rotation direction and suppresses movement of the end, on the side of the second direction, of the clutch spring with respect to the clutch center in the rotation direction, and
during the time period until the center-side assist cam surface and the pressure-side assist cam surface approach and contact each other from a state of being apart from each other in the rotation direction, an axis of the clutch spring inclines in a direction from the center-side assist cam surface toward the clutch spring as extending in the first direction from the side of the second direction, or is parallel to a straight line extending in a moving direction in which the pressure plate moves.
